# FASCICULE DE BREVET EUROPEEN

(11) **EP 4 490 394 B1**
(45) Date de publication et mention de la délivrance du brevet: **20.08.2025**
(21) Numéro de dépôt: 23713720.3
(22) Date de dépôt: 09.03.2023
(51) Int. Cl.: F02C 7/22, F02C 7/224, F02C 7/232, F02K 9/60, F02K 9/44, B64D 37/14, F02C 3/22, F02C 9/40, B64D 37/08

(54) **DISPOSITIF DE RESERVOIR CRYOGENIQUE AERONAUTIQUE DE STOCKAGE D'HYDROGENE, POUR EMPORT EXTERIEUR PAR UN AERONEF**
LUFTFAHRT-KRYOTANKVORRICHTUNG ZUR WASSERSTOFFSPEICHERUNG FÜR EXTERNEN TRANSPORT DURCH EIN FLUGZEUG
AERONAUTICAL CRYOGENIC TANK DEVICE FOR HYDROGEN STORAGE, FOR EXTERNAL TRANSPORTATION BY AN AIRCRAFT

(30) Priorité: 14.03.2022 FR 2202234
(43) Date de publication de la demande: 15.01.2025
(73) Titulaire: Aresia-Villeneuve, 92390 Villeneuve La Garenne (FR)
(72) Inventeur: SUTTER, Xavier, 92390 Villeneuve La Garenne (FR); BERTOLO, Jean-Christophe, 92390 Villeneuve La Garenne (FR); LEGRAND, Pascal, 92390 Villeneuve La Garenne (FR); PAUN, Florin-Calin, 92390 Villeneuve La Garenne (FR); WALKER, Nicolas, 92390 Villeneuve La Garenne (FR)
(74) Mandataire: Cabinet Netter
(86) Numéro de dépôt international: PCT/FR2023/050320
(87) Numéro de publication internationale: WO 2023/175260

(56) Documents cités:
- RU-C1- 2 133 696
- US-A1- 2008 256 960
- US-A1- 2016 039 521

## Description

La présente invention concerne le domaine de l'aéronautique.

Depuis ses débuts, l'aéronautique a utilisé des moteurs à essence à haut indice d'octane. Après 1945, le développement du réacteur et de la turbine a conduit à l'utilisation du kérosène, dont la masse moléculaire est plus élevée que celle de l'essence, dont la densité énergétique est plus élevée, le rendement plus élevé et dont l'inflammabilité est inférieure. Le stockage de ces carburants est effectué généralement dans des réservoirs situés dans les ailes, dans la liaison fuselage-aile ou dans la queue.

La tendance à la réduction des émissions de gaz carbonique a conduit à des moteurs consommant moins. Toutefois les gains sur les émissions de gaz carbonique s'amenuisent au fur et à mesure de la maturité de certaines technologies, notamment la vitesse en extrémité des pales des aubes. Il est apparu de plus en plus souhaitable d'introduire une rupture.

Ainsi sont apparus des projets d'avions à gaz. La combustion de gaz à chaîne carbonée courte ou inexistante le cas échéant avec de l'oxygène, est peu ou non polluante. Par contre, le stockage de gaz H2, O2 ou en C1 ou C2 en raison de la petite taille de la molécule de gaz est difficile et sujet à des risques de fuites.

Au sol, la conservation de tels gaz est en général effectuée dans des enveloppes sous pression trop lourdes, trop volumineuses et contenant trop d'énergie potentielle de pression pour être embarquées à bord d'un aéronef ou dans des réservoirs cryogéniques soudés et/ou collés. La conservation cryogénique de tels gaz est limitée à une durée limitée proportionnelle au volume stocké.

Par ailleurs, l'hydrogène, le méthane, l'éthane, l'éthylène, l'acétylène ou l'oxygène stocké à l'état liquide n'est pas utilisable par un moteur à combustion interne ou externe ou une pile à combustible. La consommation finale nécessite un état gazeux.

Un dispositif de pod aéronautique démontable à capacité de stockage cryogénique est connu de US 2016/039521 A1.

Le besoin est apparu de stocker du gaz de propulsion au sein d'un aéronef pour sa consommation à bord tout en mettant en œuvre les savoir-faire de maintenance aéronautique et en évitant le besoin d'une nouvelle normalisation. En effet, l'élaboration de normes nouvelles est un processus long et consommateur de temps, d'où un risque de générer des retards dans la commercialisation d'avions à gaz. L'acquisition de nouveaux savoir-faire de maintenance est également longue, coûteuse, voire peut susciter des réticences.

Selon la revendication 1, l'invention propose un dispositif de pod aéronautique démontable à capacité de stockage cryogénique, pour emport extérieur par un aéronef, comprenant un réservoir cryogénique avant, un réservoir cryogénique arrière, au moins un réservoir central de gazéification et de stockage temporaire pour la montée en pression du gaz alimenté par le réservoir cryogénique avant et le réservoir cryogénique arrière. Grâce à l'invention, le dispositif peut présenter une forme allongée facilitant son montage dans ou sur l'aéronef avec un rapport élevé d'énergie stockée sur encombrement du dispositif. Le stockage et la gazéification sont effectués séparément et à proximité l'un de l'autre. On entend par démontable le fait que le dispositif de pod peut être monté et démonté d'un aéronef très rapidement, sur une piste d'aéroport, avec ou si possible sans outil. Il est intéressant que le montage soit de type « branche et vole ».

A la différence du domaine spatial où les pièces sont utilisées une fois pendant une durée de quelques secondes ou dizaines de secondes, le domaine aéronautique est demandeur de pièces à longue durée de vie de plusieurs dizaines de milliers d'heures et plusieurs dizaines de milliers de cycles.

Dans un mode de réalisation, chaque réservoir cryogénique, avant comme arrière, présente une forme extérieure convexe, et comprend une enveloppe intérieure définissant une chambre de stockage, une enveloppe extérieure contenant l'enveloppe intérieure, une chambre d'isolation définie entre l'enveloppe intérieure et l'enveloppe extérieure, et un collecteur amovible traversant l'enveloppe extérieure et l'enveloppe intérieure de manière étanche, et une conduite alimentée par le collecteur, et le réservoir central de stockage temporaire est de forme quasi-torique ou quasi annulaire. L'occupation de l'espace disponible est améliorée.

Dans un mode de réalisation, chaque réservoir cryogénique est super isolé sous vide contre la conduction, la convection et le rayonnement. L'évaporation naturelle est réduite.

Dans un mode de réalisation, le dispositif est pourvu d'un réservoir cryogénique avant et d'un réservoir cryogénique arrière, de forme allongée le long d'un axe commun. Une forme extérieure allongée du dispositif peut être obtenue.

Dans un mode de réalisation, le dispositif comprend au moins deux réservoirs cryogéniques avant et au moins deux réservoirs cryogéniques arrière, de forme sphérique. L'occupation de l'espace disponible est améliorée pour une masse contenue.

Dans un mode de réalisation, le dispositif comprend une pluralité de réservoirs de stockage temporaire disposés chacun entre deux réservoirs cryogéniques. La capacité de stockage temporaire est accrue.

Dans un mode de réalisation, le réservoir central de stockage temporaire forme un organe de gazéification, une vanne amont étant prévue pour être ouverte pour l'écoulement liquide lors d'une phase de remplissage du réservoir central de stockage temporaire et fermée hors de la phase de remplissage, une vanne aval étant prévue pour être ouverte pour l'écoulement gazeux lors d'une phase de vidange du réservoir central de stockage temporaire et fermée hors de la phase de vidange, la vanne amont et la vanne aval étant fermées lors d'une phase de gazéification. Le dispositif assure à l'aéronef, par le volume contenu dans le ou les réservoirs temporaires, une autonomie nécessaire indépendamment de l'état des réservoirs cryogéniques. Les réservoirs temporaires peuvent être prévus pour une pression de gaz de plusieurs centaines de bars, une pression de gaz choisie étant néanmoins fournie aux organes consommateurs.

Dans un mode de réalisation, la vanne amont et la vanne aval sont commandées en tout ou rien. Les vannes sont fiables.

Dans un mode de réalisation, le dispositif comprend un compresseur disposé en aval de la vanne aval, ledit compresseur étant actif en fin de phase de vidange pour amener la pression dans le réservoir central de stockage temporaire à une valeur inférieure à la valeur la plus faible de la pression dans le réservoir cryogénique avant et dans le réservoir cryogénique arrière, et un détendeur disposé en aval de la vanne aval, ledit détendeur étant actif en début de phase de vidange pour amener la pression du gaz en sortie à une valeur inférieure à la pression dans le réservoir central de stockage temporaire. Le réservoir temporaire peut être vidé suffisamment de façon à accroître la quantité de gaz disponible pour les organes consommateurs et amener le réservoir temporaire à une pression en fin de vidange inférieure à la pression courante dans le réservoir cryogénique désigné à ce moment pour le remplissage. Le remplissage du réservoir temporaire est effectué par manœuvre de vanne cryogénique sous l'effet de la différence de pression. Se passer d'une pompe cryogénique permet un gain de masse et une réduction du risque d'incident.

Dans un mode de réalisation, chacun des réservoirs cryogéniques est prévu pour une pression de service inférieure à 8 bars et le réservoir central de stockage temporaire est prévu pour une pression de service supérieure à 500 bars. Les réservoirs cryogéniques sont de masse à vide réduite.

D'autres caractéristiques et avantages de l'invention apparaîtront à l'examen de la description détaillée ci-après, et des dessins annexés, sur lesquels :

[Fig.1] illustre de façon schématique en vue de côté en élévation un dispositif de réservoir cryogénique aéronautique selon un aspect de l'invention.

[Fig.2] illustre de façon schématique en coupe longitudinale un dispositif de réservoir cryogénique aéronautique selon un aspect de l'invention.

[Fig.3] illustre de façon schématique en éclaté un dispositif de réservoir cryogénique aéronautique selon un aspect de l'invention.

[Fig.4] illustre de façon schématique en coupe longitudinale un dispositif de réservoir cryogénique aéronautique selon un autre aspect de l'invention.

[Fig.5] illustre de façon schématique en coupe longitudinale un dispositif de réservoir cryogénique aéronautique selon un autre aspect de l'invention.

[Fig.6] illustre de façon schématique un circuit de distribution selon un aspect de l'invention.

Les dessins annexés pourront non seulement servir à compléter l'invention, mais aussi contribuer à sa définition, le cas échéant.

Le dispositif aéronautique de stockage de gaz est conçu pour être emporté par un aéronef : avion, drone, hélicoptère, etc.. Le dispositif aéronautique de stockage de gaz contient du liquide et fournit du gaz. En d'autres termes, le gaz est stocké à très basse température sous forme liquide dans un réservoir cryogénique. Un réservoir cryogénique est inapte à résister à des pressions élevées, notamment supérieures à 10 bars.

Par ailleurs, le gaz stocké à l'état liquide n'est pas utilisable par un moteur à combustion interne ou externe ou une pile à combustible. La consommation finale nécessite de gaz dans une plage de température et une plage de pression spécifiées par le fabricant de l'organe consommateur.

Le gaz stocké est choisi parmi hydrogène, méthane, éthane, l'éthylène, l'acétylène et oxygène.

La Demanderesse entend aussi prendre en compte que la gazéification est un phénomène rapide même dans une atmosphère ambiante à -55°C rencontrée en altitude. A titre de mode de réalisation, l'hydrogène gazeux à 0°C et 1 atmosphère est de masse volumique environ 800 fois plus faible que l'hydrogène liquide à - 253°C, donc de volume environ 800 fois plus élevé.

Par ailleurs, les règles de maintenance aéronautique imposent de pouvoir démonter et réparer ou remplacer la plupart des pièces de l'avion. Ainsi, un aéronef est capable de se poser en un lieu quelconque - aérodrome pour un avion, aire de pose pour un hélicoptère - adapté à sa masse et à ses exigences pour l'atterrissage mais non pourvu d'équipements de maintenance spécifiques au modèle de l'aéronef. En cas d'avarie détectée, l'aéronef est configuré pour être réparé, de manière pérenne ou provisoire, ou démonté de façon à remplacer ou à réparer un composant défectueux, conformément aux manuels et documents du constructeur agréés par les autorités de sécurité aérienne. Il est souhaitable que le composant soit aisément accessible par un opérateur de maintenance. En cas de remplacement, il est souhaitable que le composant soit le plus petit possible pour une manutention et un acheminement aisé. En cas de réparation, il est souhaitable que le composant soit réparable par des outils et des procédés éprouvés et courants dans le domaine aéronautique.

Un aéronef fait l'objet de visites d'inspection journalières, hebdomadaires, etc, immobilisant l'aéronef pour une durée à l'inverse de la fréquence.

La Demanderesse a identifié un besoin de stockage, notamment d'hydrogène, de méthane, d'éthane, d'éthylène, d'acétylène ou d'oxygène, à partir de réservoirs cryogéniques aéronautiques portés par l'aéronef.

D'un autre point de vue, les avions sont actuellement soumis à une règle de distance maximale d'une piste d'atterrissage selon la certification ETOPS. Cette distance dépend du type d'avion.

Souhaitant assurer une sécurité de haut niveau ainsi qu'une perception de cette sécurité par les utilisateurs, la Demanderesse a identifié le besoin de voler même en cas d'avarie de réservoir cryogénique nécessitant un relâchement dans l'atmosphère du gaz contenu.

Le dispositif de pod aéronautique de stockage 30 vise à satisfaire le besoin complexe ainsi analysé par la Demanderesse.

Le dispositif de pod cryogénique aéronautique de stockage 30 est configuré pour être emporté par un aéronef. Le dispositif de pod aéronautique de stockage 30 est chargé de liquide et fournit du sous une pression choisie. En d'autres termes, la carburant ou comburant est stocké à très basse température sous forme liquide dans un réservoir cryogénique. Un réservoir cryogénique est inapte à résister à des pressions élevées, notamment supérieures à 10 bars.

Le dispositif aéronautique de stockage 30 se présente sous la forme d'un pod. Le dispositif aéronautique de stockage 30 est muni d'un mécanisme d'attache 31 rapide à une aile d'aéronef.

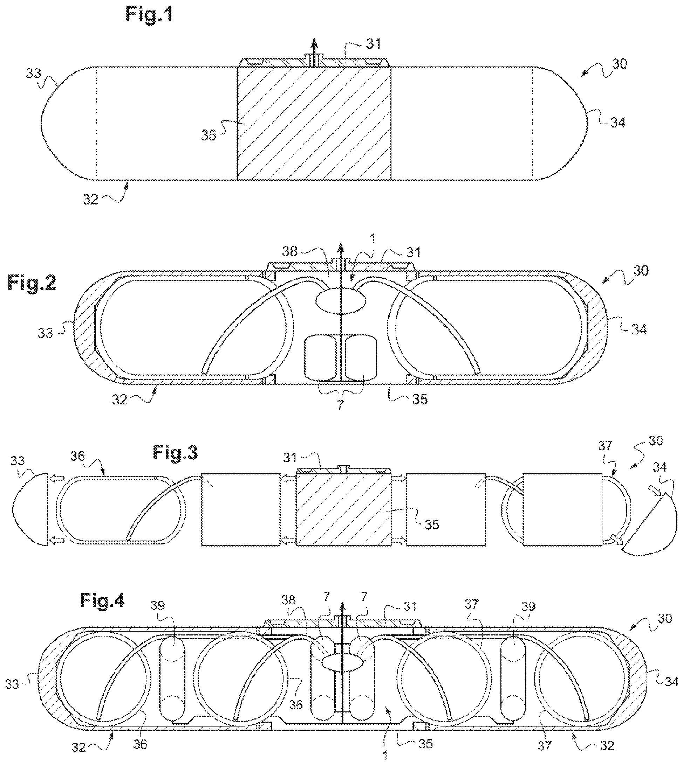

Dans le mode de réalisation représenté sur les figures 1 à 3, le dispositif de réservoir cryogénique aéronautique de stockage 30 présente une forme allongée. Le dispositif de réservoir cryogénique aéronautique de stockage 30 comprend un corps central 32, une extrémité avant 33 et une extrémité arrière 34. L'extrémité avant 33 et l'extrémité arrière 34 comprennent des coques assurant une forme aérodynamique. Le corps central 32 comprend un ou plusieurs tronçons généralement cylindriques. Ici, trois tronçons sont prévus, un tronçon central 35, un tronçon avant et un tronçon arrière. Les coques et le ou les tronçons du corps central sont démontables. Les coques et le ou les tronçons du corps central assurent une protection mécanique contre les impacts, notamment les impacts aviaires en extrémité avant et les chocs de manipulation.

Le mécanisme d'attache 31 est à montage/démontage rapide permettant le montage du dispositif de réservoir cryogénique aéronautique 30 à l'aéronef en un temps bref, notamment quelques minutes ou dizaines de minutes, en parallèle d'autres opérations menées sur piste. Ledit temps bref est inférieur au minimum de temps d'escale. Le mécanisme d'attache 31 est prévu sensiblement au milieu de la longueur du dispositif de réservoir cryogénique aéronautique 30 ou sensiblement proche longitudinalement du centre de gravité du dispositif de réservoir cryogénique aéronautique 30. Ici, le mécanisme d'attache 31 est solidaire du tronçon central 35 du corps central. Le mécanisme d'attache 31 comprend un raccord rapide de conduite de gaz. Le tronçon central 35 supporte les tronçons avant et arrière. Les tronçons avant et arrière supportent les extrémités avant et arrière respectivement.

Comme illustré sur la figure 1, le corps central 32, l'extrémité avant 33 et l'extrémité arrière 34 présentent des surfaces extérieures adaptées pour l'écoulement de l'air à la vitesse de déplacement de l'aéronef, notamment des surfaces aérodynamiques. Lesdites surfaces extérieures forment un carénage aérodynamique. Des joints peuvent être prévus entre le corps central 32 et l'extrémité avant 33, d'une part, et entre le corps central 32 et l'extrémité arrière 34 d'autre part. Des évents sont ménagés dans le corps central 32, l'extrémité avant 33 et/ou l'extrémité arrière 34 en vue d'un équilibre de pression et d'une ventilation. La condensation et le givre sont évités.

Le corps central 32 assure le support des organes disposés en son intérieur et à ses extrémités. Le corps central 32 peut comprendre au moins une couche de matériau absorbant les chocs et les vibrations. Le corps central 32 assure une fonction d'amortisseur limitant ainsi les contraintes sur le mécanisme d'attache 31 et sur les autres organes du dispositif décrits ci-après. Le corps central 32 forme un carénage auto-porteur.

Le dispositif de réservoir cryogénique aéronautique 30 comprend un réservoir cryogénique avant 36 et un réservoir cryogénique arrière 37. Le tronçon central 35 supporte le réservoir cryogénique avant 36 et un réservoir cryogénique arrière 37.

Le réservoir cryogénique avant 36 et un réservoir cryogénique arrière 37 sont montés à l'intérieur des tronçons du corps central 32. Le réservoir cryogénique avant 36 et le réservoir cryogénique arrière 37 peuvent présenter des formes légèrement différentes afin d'optimiser l'occupation de l'espace disponible, tout en étant de construction générale similaire. Le réservoir cryogénique avant et le réservoir cryogénique arrière sont montés tête-bêche. Le réservoir cryogénique avant 36 et le réservoir cryogénique arrière 37 sont ici représentés alignés selon un axe longitudinal, cette caractéristique étant optionnelle.

Le réservoir cryogénique avant 36 et le réservoir cryogénique arrière 37 peuvent présenter une forme allongée au tour d'un axe commun ou de deux axes. Le réservoir cryogénique avant 36 et le réservoir cryogénique arrière 37 peuvent présenter un avant bombé, un arrière bombé et une partie centrale cylindrique de révolution.

Le tronçon avant recouvre sensiblement le réservoir cryogénique avant 36. Le tronçon arrière recouvre sensiblement le réservoir cryogénique arrière 37. Le tronçon central 35 recouvre sensiblement l'extrémité arrière du réservoir cryogénique avant 36, l'extrémité avant du réservoir cryogénique arrière 37 et un espace central 38. L'espace central 38 présente une forme générale annulaire. L'espace central 38 est à la pression ambiante. L'espace central 38 est ventilé.

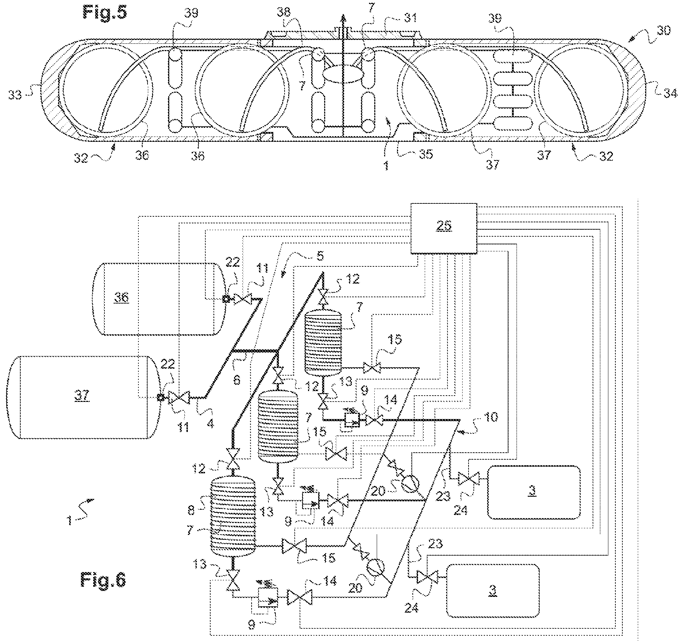

Le dispositif de réservoir cryogénique aéronautique de stockage 30 comprend au moins un réservoir central de stockage temporaire 7. Ici, deux réservoirs centraux de stockage temporaire 7 sont représentés. Les réservoirs centraux de stockage temporaire 7 sont montés en parallèle. Les réservoirs centraux de stockage temporaire 7 sont gérés par un circuit de distribution et de conditionnement 1 illustré en figure 6. Les réservoirs centraux de stockage temporaire 7 sont alternativement remplis de liquide provenant d'un au moins des réservoirs cryogéniques 36 et 37 et, après gazéification, vidés du gaz qu'ils contiennent. Les réservoirs centraux de stockage temporaire 7 fonctionnent en alternance l'un par rapport à l'autre, l'un en remplissage, l'autre en vidange et vice-versa dans la plupart des temps de fonctionnement. Il peut être prévu de décoller avec les deux réservoirs centraux de stockage temporaire 7 pleins.

Chaque réservoir central de stockage temporaire 7 forme un gazéificateur. Chaque réservoir central de stockage temporaire 7 forme un échangeur de chaleur. Chaque réservoir central de stockage temporaire 7 comprend au moins une entrée de liquide cryogénique et au moins une sortie de gaz. Les réservoirs centraux de stockage temporaire 7 sont dépourvus d'isolation thermique. Les réservoirs centraux de stockage temporaire 7 comprennent une enveloppe simple. Les réservoirs centraux de stockage temporaire 7 sont métalliques et/ou en matériaux composites. Les réservoirs centraux de stockage temporaire 7 sont réalisés en tout ou partie en matériau conducteur. Les réservoirs centraux de stockage temporaire 7 résistent aux températures cryogéniques. Les réservoirs centraux de stockage temporaire 7 résistent aux hautes pressions de service par rapport aux réservoirs cryogéniques avant 36 et arrière 37 à basse pression. Les réservoirs centraux de stockage temporaire 7 sont à courte durée de stockage par rapport aux réservoirs cryogéniques avant 36 et arrière 37 à longue durée de stockage.

Les réservoirs centraux de stockage temporaire 7 sont montés dans l'espace central, ici à l'opposé du mécanisme d'attache rapide. Dans le mode de réalisation de la figure 2, les réservoirs centraux de stockage temporaire 7 présentent une forme cylindrique d'axe vertical à extrémités bombées.

L'espace central 38 étant compact, les conduites de liquide et les conduites de gaz sont de longueur limitée. La masse du dispositif est optimisée.

Dans le mode de réalisation illustré sur la figure 4, le réservoir cryogénique aéronautique comprend deux réservoirs cryogéniques avant 36 et deux réservoirs cryogéniques arrière 37. Les réservoirs cryogéniques avant 36 et les réservoirs cryogéniques arrière 37 présentent une forme sphérique. Les réservoirs cryogéniques avant 36 et les réservoirs cryogéniques arrière 37 sont ici représentés alignés, cette caractéristique étant optionnelle. Les réservoirs centraux de stockage temporaire 7 sont de forme annulaire, notamment torique. De plus des réservoirs de stockage temporaire supplémentaires 39 sont disposés entre les réservoirs cryogéniques avant 36 et entre les réservoirs cryogéniques arrière 37. Les réservoirs cryogéniques supplémentaires 39 sont de forme annulaire, notamment torique.

Chaque réservoir cryogénique est isolé pour contenir du carburant ou comburant liquide à -253°C. Chaque réservoir cryogénique est capable de résister à une pression maximale de service de l'ordre de 6 à 10 bars.

Dans le mode de réalisation illustré sur la figure 5, les réservoirs tampons supplémentaires 39 entre les réservoirs cryogéniques avant 36 sont disposés en forme de polygone régulier. Chaque réservoir cryogénique supplémentaire 39 présente un corps cylindrique et des extrémités arrondies. Les axes des corps des réservoirs tampons supplémentaires 39 définissent ici un hexagone.

Les réservoirs tampons supplémentaires 39 entre les réservoirs cryogéniques arrière 37 sont disposés parallèlement. Chaque réservoir cryogénique supplémentaire 39 présente un corps cylindrique et des extrémités arrondies. L'axe du dispositif et les axes des réservoirs tampons supplémentaires 39 sont parallèles. En coupe transversale, les axes des corps des réservoirs tampons supplémentaires 39 définissent les sommets d'un polygone régulier. Les réservoirs tampons supplémentaires 39 sont disposés comme les chambres d'un barillet.

La figure 5 montre deux modes de réalisation à la fois, en partie avant le mode polygonal, en partie arrière le mode parallèle, regroupés pour la concision. En pratique, un dispositif comporte un seul de ces modes avec soit tous les réservoirs tampons supplémentaires 39 en polygone, soit tous les réservoirs tampons supplémentaires 39 en parallèle. Dans les deux modes de réalisation, la construction des réservoirs tampons supplémentaires 39 est très robuste en raison de leur forme adaptée aux pressions élevées et aux contraintes de fabrication.

Dans un mode de réalisation, il est prévu au moins un réservoir cryogénique supplémentaire 39 à corps cylindrique et extrémités bombées.

### Le circuit de distribution de gaz

Le circuit de distribution 1 est expliqué en référence à la figure 6.

Le circuit de distribution 1 pour aéronef est alimenté par les réservoirs cryogéniques 36, 37 pour fournir en gaz un ou plusieurs organes consommateurs de l'aéronef. Un débitmètre 22 est disposé en sortie de chaque réservoir cryogénique 2.

Chaque réservoir cryogénique est muni d'une conduite de sortie 4. Les termes amont et aval se réfèrent au sens d'écoulement du fluide, liquide ou gaz en fonctionnement normal.

Le circuit de distribution 1 comprend une première vanne 11 pour chaque réservoir cryogénique. La première vanne 11 est montée sur la conduite de sortie 4. Les premières vannes 11 sont pilotées avec une position ouverte et une position fermée. Les positions intermédiaires des premières vannes 11 sont dynamiques en ce sens que les premières vannes 11 sont en mouvement en passant dans lesdites positions intermédiaires. En d'autres termes, les premières vannes 11 sont tout ou rien. Les premières vannes 11 peuvent être disposées immédiatement en aval des débitmètres 22.

Les premières vannes 11 débouchent dans un distributeur cryogénique 5. Le distributeur cryogénique 5 peut comprendre une conduite commune 6 reliant les sorties des premières vannes 11. Le distributeur est cryogénique en ce sens qu'il voit passer du carburant/comburant liquide.

Le distributeur cryogénique 5 comprend une pluralité de sorties, ici trois. Sur chacune desdites sorties sont montées des deuxièmes vannes 12. Les deuxièmes vannes 12 sont pilotées avec une position ouverte et une position fermée. Les positions intermédiaires des deuxièmes vannes 12 sont dynamiques en ce sens que les deuxièmes vannes 12 sont en mouvement en passant dans lesdites positions intermédiaires. En d'autres termes, les deuxièmes vannes 12 sont tout ou rien. Les deuxièmes vannes 12 sont ici au nombre de trois.

En aval de chaque deuxième vanne 12 est monté un réservoir central 7. Trois réservoirs centraux 7 sont prévus dans ce mode de réalisation. Chaque réservoir central 7 sert également de gazéificateur. Une isolation peut être évitée. Chaque réservoir central 7 reçoit du liquide et fournit en aval du gaz. Une élévation de pression ou étape de gazéification se produit dans chaque réservoir central 7 entre le remplissage et la vidange. Chaque réservoir central 7 est capable de résister à une pression maximale de service de l'ordre de 300 à 1000 bars. Chaque réservoir central 7 est conçu pour fonctionner dans une plage de température allant de - 253°C à +60°C. Les réservoirs centraux 7 sont biphasiques sur une partie des étapes de fonctionnement et monophasiques gazeux sur les autres étapes de fonctionnement. Chaque réservoir central 7 peut être équipé d'un organe de chauffage 8.

En aval de chaque réservoir central 7 est installé une troisième vanne 13 pour fournir du gaz et un détendeur 9 en aval de la troisième vanne 13. Le détendeur 9 écrête la pression pour fournir du gaz à une pression de consommation fixée par le fabricant de l'organe consommateur 3. Le détendeur 9 est actif lorsque la pression dans le réservoir central 7 est supérieure à la pression de consommation et inactif autrement. La pression de consommation est inférieure à la pression maximale du réservoir central 7. La pression de consommation est indépendante de la pression maximale des réservoirs cryogéniques. Les troisièmes vannes 13 sont tout ou rien.

En aval de chaque détendeur 9, peut être prévue une quatrième vanne 14 commandée. Les quatrièmes vannes 14 sont tout ou rien.

Les quatrièmes vannes 14 ou les détendeurs 9, selon l'option choisie, débouchent dans un collecteur 10. Le collecteur 10 peut comprendre une conduite reliant les sorties des quatrièmes vannes 14 ou des détendeurs 9. Le collecteur 10 voit passer du gaz. Le collecteur 10 est relié vers l'aval à des conduites d'alimentation 23 vers les organes consommateurs 3. En général, une conduite d'alimentation 23 est prévue pour chaque organe consommateur 3. Chaque conduite d'alimentation 23 peut être équipée d'une vanne d'alimentation 24 pilotée. La vanne d'alimentation 24 est à débit variable.

Le circuit de distribution 1 comprend au moins un compresseur 20 relié au collecteur 10. En général deux compresseurs 20 sont prévus en parallèle pour une redondance. Le compresseur 20 est électrique. Le compresseur 20 peut être équipé d'une vanne amont pilotée. Le compresseur 20 débite du gaz dans le collecteur 10. En particulier, le collecteur 10 est constitué d'une conduite en cas d'unique organe consommateur 3.

En aval de chaque réservoir central 7 est installé une cinquième vanne 15 pour fournir du gaz et un deuxième collecteur en aval des cinquièmes vannes 15. Le deuxième collecteur est relié au compresseur 20. Les cinquièmes vannes 15 permettent d'isoler les réservoirs centraux 7 et le compresseur 20. Les cinquièmes vannes 15 sont commandées. Les cinquièmes vannes 15 sont tout ou rien.

Le compresseur 20 augmente la pression pour fournir du gaz à une pression égale à une pression de consommation fixée par le fabricant de l'organe consommateur 3. La pression de consommation est inférieure à la pression maximale dans le réservoir central 7. Le compresseur 20 permet de prélever du gaz dans un réservoir central 7 dont la pression est inférieure à la pression de consommation pour alimenter le collecteur 10 et les organes consommateurs 3. Une vidange plus complète du réservoir central 7 permet d'augmenter l'autonomie fournie par le gaz contenu dans un réservoir central 7 ou de réduire le volume du réservoir central 7.

Une vidange du réservoir central 7 suffisante pour amener la pression interne du réservoir central 7 à une valeur inférieure à la pression dans un des réservoirs cryogéniques permet, lors du remplissage succédant à la vidange, de transférer le liquide du réservoir cryogénique vers le réservoir central 7 par différence de pression. Ainsi, le liquide du réservoir cryogénique est aspiré par le réservoir central 7 jusqu'à l'équilibre de pression. On peut se passer de pompe cryogénique, d'où un gain de masse et d'énergie consommée.

Le circuit de distribution 1 offre une combinaison d'états individuels de chaque réservoir cryogénique, de chaque réservoir central 7 et de chaque organe consommateur 3. Plusieurs organes consommateurs 3 peuvent être actifs simultanément. En mode normal, un réservoir cryogénique est en cours de vidange tandis que les autres sont inactifs donc fermés. Toutefois, dans certaines situations, par exemple pour diminuer la pression dans plusieurs réservoirs cryogéniques, un mode particulier peut être prévu dans lequel plusieurs réservoirs cryogéniques sont en cours de vidange. Les réservoirs centraux 7 présentent un mode de remplissage, un mode de gazéification, un mode de stockage gazeux et un mode de vidange.

Lorsque l'un des réservoirs cryogéniques est en cours de vidange, la première vanne 11 correspondante est ouverte et les autres premières vannes 11 sont fermées. Lorsque l'un des organes consommateurs 3 est en cours d'alimentation, la vanne d'alimentation 24 correspondante est ouverte.

Lorsque l'un des réservoirs centraux 7 est en mode de remplissage, la deuxième vanne 12 reliée audit réservoir central 7 est ouverte et au moins l'une des premières vannes 11 est ouverte. Les autres deuxièmes vannes 12 sont fermées sauf dans le cas où un remplissage simultané de deux réservoirs centraux 7 est exécuté. La troisième vanne 13 reliée audit réservoir central 7 est fermée. La cinquième vanne reliée audit réservoir central 7 est fermée.

Lorsque l'un des réservoirs centraux 7 est en mode de gazéification, la deuxième vanne 12 reliée audit réservoir central 7, la troisième vanne 13 reliée audit réservoir central 7 et la cinquième vanne 15 reliée audit réservoir central 7 sont fermées. Le mode de gazéification est de courte durée, en particulier en cas d'atmosphère ambiante chaude et/ou de chauffage du réservoir central 7.

Lorsque l'un des réservoirs centraux 7 est en mode de vidange, la deuxième vanne 12 reliée audit réservoir central 7 est fermée. En première partie de vidange, la pression dans le réservoir central 7 est supérieure à la pression de consommation. La troisième vanne 13 reliée audit réservoir central 7 est ouverte, la quatrième vanne 14 correspondante est ouverte et la cinquième vanne reliée audit réservoir central 7 est fermée. Le gaz subit une réduction de pression dans le détendeur 9 et est fourni au collecteur 10 à la pression de consommation. Le gaz est ensuite consommé par le ou les organes consommateurs 3.

A un instant donné, parmi trois réservoirs centraux 7, l'un est en mode de remplissage, un autre en mode de gazéification puis stockage et le troisième en mode de vidange. Comme les modes ont des durées différentes, on peut aussi trouver deux réservoirs centraux 7 en mode de remplissage et le troisième en mode de vidange ou l'inverse. On peut aussi trouver deux réservoirs centraux 7 en mode de stockage et le troisième en mode de vidange ou l'inverse.

Dans le mode de réalisation, un débitmètre 22 est disposé en sortie de chaque source de carburant/comburant liquide 2. Les débitmètres 22 permettent de connaître avec une précision suffisante, la quantité de liquide fournie à tel réservoir central 7.

Dans le mode de réalisation, le circuit de distribution 1 comprend une unité de commande 25 recevant une consigne extérieure par exemple provenant des organes consommateurs 3 extérieurs au dispositif aéronautique de stockage ou d'une unité de commande centrale de l'aéronef, et des données de débit liquide provenant des débitmètres 22. L'unité de commande 25 génère et envoie des consignes auxdites premières, deuxièmes, troisièmes, quatrièmes et cinquièmes vannes commandées et aux vannes d'alimentation 24 commandées. Les consignes peuvent être « ouvert » ou « fermé ». L'unité de commande 25 gère ladite combinaison d'états individuels.

En variante, les premières vannes 11 peuvent être remplacées par au moins une vanne multivoies possédant plusieurs entrées et une sortie. Dans ce cas, il est intéressant de prévoir une vanne multivoies à positions mixtes, notamment au moins une position de vidange simultanée de deux ou plus réservoirs cryogéniques 2 pour en réduire la pression en évitant une perte dans l'atmosphère.

En variante, les deuxièmes vannes 12 peuvent être remplacées par au moins une vanne multivoies possédant une entrée et plusieurs sorties, une par réservoir central 7. Ladite vanne multivoies forme un distributeur.

En variante, les détendeurs 9 sont remplacés par un détendeur 9 unique, les troisièmes vannes 13 débouchant dans le détendeur 9 unique. Dans ce cas, les troisièmes vannes 13 peuvent être remplacées par au moins une vanne multivoies possédant plusieurs entrées et une sortie vers le détendeur. Les quatrièmes vannes 14 sont alors remplacées par une seule quatrième vanne 14, le cas échéant non pilotée.

En variante, les cinquièmes vannes 15 peuvent être remplacées par au moins une vanne multivoies possédant plusieurs entrées, une par réservoir central 7, et une sortie vers le compresseur 20 ou les compresseurs 20. Ladite vanne multivoies forme un collecteur 10.

Les réservoirs cryogéniques 2 étant sujet à une évaporation à partir du liquide, il peut être prévu un circuit de collecte de gaz dans une partie supérieure des réservoirs cryogéniques 2. Le circuit de collecte peut être actif au-dessus d'une pression seuil par une soupape à pression étalonnée. Le circuit de collecte comprend un compresseur pour réinjecter le gaz en aval, par exemple entre les cinquièmes vannes 15 et le compresseur 20.

En option des débitmètres supplémentaires sont disposés en entrée de chaque réservoir tampon. Une redondance de la mesure de débit de liquide est assurée.

## Revendications

1. Dispositif de pod aéronautique démontable (30) à capacité
de stockage cryogénique, pour emport extérieur par un aéronef, le dispositif de pod **caractérisé en ce qu'**il comprend:
un réservoir cryogénique avant (36), un réservoir cryogénique arrière (37), et au moins un réservoir central de gazéification et de stockage temporaire (7) pour la montée en pression du gaz alimenté par le réservoir cryogénique avant (36) et le réservoir cryogénique arrière (37).

2. Dispositif selon la revendication 1, dans lequel chaque réservoir cryogénique, avant comme arrière, présente une forme extérieure convexe, et comprend une enveloppe intérieure définissant une chambre de stockage, une enveloppe extérieure contenant l'enveloppe intérieure, une chambre d'isolation définie entre l'enveloppe intérieure et l'enveloppe extérieure, et un collecteur amovible traversant l'enveloppe extérieure et l'enveloppe intérieure de manière étanche, et une conduite alimentée par le collecteur, et le réservoir central de stockage temporaire (7) est de forme quasi-torique ou quasi annulaire.

3. Dispositif selon l'une des revendications précédentes, dans lequel chaque réservoir cryogénique est super isolé sous vide contre la conduction, la convection et le rayonnement.

4. Dispositif selon l'une des revendications précédentes, pourvu d'un réservoir cryogénique avant (36) et d'un réservoir cryogénique arrière (37), de forme allongée le long d'un axe commun.

5. Dispositif selon l'une des revendications 1 à 3, comprenant au moins deux réservoirs cryogéniques avant (36) et au moins deux réservoirs cryogéniques arrière (37), de forme sphérique.

6. Dispositif selon l'une des revendications précédentes, comprenant une pluralité de réservoirs de stockage temporaire (39) disposés chacun entre deux réservoirs cryogéniques.

7. Dispositif selon l'une des revendications précédentes, dans lequel le réservoir central de stockage temporaire (7) forme un organe de gazéification, une vanne amont (12) étant prévue pour être ouverte pour l'écoulement liquide lors d'une phase de remplissage du réservoir central de stockage temporaire (7) et fermée hors de la phase de remplissage, une vanne aval (13, 15) étant prévue pour être ouverte pour l'écoulement gazeux lors d'une phase de vidange du réservoir central de stockage temporaire (7) et fermée hors de la phase de vidange, la vanne amont et la vanne aval étant fermées lors d'une phase de gazéification.

8. Dispositif selon la revendication 7, dans lequel la vanne amont et la vanne aval sont commandées en tout ou rien.

9. Dispositif selon l'une des revendications précédentes, comprenant un compresseur (20) disposé en aval d'une vanne aval (15), ledit compresseur (20) étant actif en fin de phase de vidange pour amener la pression dans le réservoir central de stockage temporaire (7) à une valeur inférieure à la valeur la plus faible de la pression dans le réservoir cryogénique avant (36) et dans le réservoir cryogénique arrière (37), et un détendeur (9) disposé en aval de la vanne aval, ledit détendeur (9) étant actif en début de phase de vidange pour amener la pression du gaz en sortie à une valeur inférieure à la pression dans le réservoir central de stockage temporaire (7).

10. Dispositif selon l'une des revendications précédentes, dans lequel chacun des réservoirs cryogéniques (36, 37) est prévu pour une pression de service inférieure à 8 bars et le réservoir central de stockage temporaire est prévu pour une pression de service supérieure à 500 bars.

## Patentansprüche

1. Zerlegbare Luftfahrt-Pod-Vorrichtung (30) mit Kryospeicherkapazität für den Außentransport durch ein Luftfahrzeug, wobei die Pod-Vorrichtung **dadurch gekennzeichnet ist, dass** sie umfasst:
einen vorderen Kryotank (36), einen hinteren Kryotank (37) und mindestens einen zentralen Begasungs- und Zwischenspeichertank (7) zum Druckaufbau des von dem vorderen Kryotank (36) und von dem hinteren Kryotank (37) zugeführten Gases.

2. Vorrichtung nach Anspruch 1, wobei jeder Kryotank, vorne und hinten, eine konvexe Außenform aufweist, und eine Innenhülle umfasst, die eine Speicherkammer definiert, eine Außenhülle, die die Innenhülle enthält, eine Isolationskammer, die zwischen der Innenhülle und der Außenhülle definiert ist, und einen abnehmbaren Kollektor, der die Außenhülle und die Innenhülle dicht durchdringt, und eine Leitung, die vom Kollektor versorgt wird, und der zentrale Zwischenspeichertank (7) nahezu torusförmig oder nahezu ringförmig ist.

3. Vorrichtung nach einem der vorhergehenden Ansprüche, bei der jeder Kryotank unter Vakuum gegen Leitfähigkeit, Konvektion und Strahlung superisoliert ist.

4. Vorrichtung nach einem der vorhergehenden Ansprüche, die mit einem vorderen Kryotank (36) und einem hinteren Kryotank (37) in länglicher Form entlang einer gemeinsamen Achse ausgestattet ist.

5. Vorrichtung nach einem der Ansprüche 1 bis 3, umfassend mindestens zwei vordere Kryotanks (36) und mindestens zwei hintere Kryotanks (37), kugelförmig.

6. Vorrichtung nach einem der vorhergehenden Ansprüche, umfassend eine Vielzahl von Zwischenspeichertanks (39), die jeweils zwischen zwei Kryotanks angeordnet sind.

7. Vorrichtung nach einem der vorhergehenden Ansprüche, bei der der zentrale Zwischenspeichertank (7) ein Begasungsorgan bildet, wobei ein vorgeschaltetes Ventil (12) vorgesehen ist, um während einer Füllphase des zentralen Zwischenspeichertanks (7) für den Flüssigkeitsfluss geöffnet und außerhalb der Füllphase geschlossen zu werden, wobei ein nachgeschaltetes Ventil (13, 15) vorgesehen ist, um während einer Entleerungsphase des zentralen Zwischenspeichertanks (7) für den Gasfluss geöffnet und außerhalb der Entleerungsphase geschlossen zu werden, wobei das vor- und das nachgeschaltete Ventil während einer Begasungsphase geschlossen sind.

8. Vorrichtung nach Anspruch 7, bei der das vorgeschaltete Ventil und das nachgeschaltete Ventil entweder ein- oder ausgeschaltet werden.

9. Vorrichtung nach einem der vorhergehenden Ansprüche, umfassend einen nach einem nachgeschalteten Ventil (15) angeordneten Kompressor (20), wobei der besagte Kompressor (20) am Ende der Entleerungsphase aktiv ist, um den Druck im zentralen Zwischenspeichertank (7) auf einen Wert zu bringen, der unter dem niedrigsten Wert des Drucks im vorderen Kryotank (36) und im hinteren Kryotank (37) liegt, und ein nach dem nachgeschalteten Ventil angeordnetes Expansionsventil (9), wobei das besagte Expansionsventil (9) zu Beginn der Entleerungsphase aktiv ist, um den Gasdruck am Ausgang auf einen Wert zu senken, der unter dem Druck im zentralen Zwischenspeichertank (7) liegt.

10. Vorrichtung nach einem der vorhergehenden Ansprüche, bei der jeder der Kryospeicher (36, 37) für einen Betriebsdruck von weniger als 8 bar und der zentrale Zwischenspeichertank für einen Betriebsdruck von mehr als 500 bar vorgesehen ist.

## Claims

1. Dismountable aeronautical pod device (30) with cryogenic storage capacity, for external transportation by an aircraft, the pod device (30) **characterized in that** it comprises:
a front cryogenic tank (36), a rear cryogenic tank (37) and at least one central gasification and temporary storage tank (7,) for the rise in pressure of the gas supplied by the front cryogenic tank (36) and the rear cryogenic tank (37).

2. Device according to Claim 1, wherein each cryogenic tank, both the front and rear, has a convex outer shape, and comprises an inner casing defining a storage chamber, an outer casing containing the inner casing, an isolation chamber defined between the inner casing and the outer casing, and a removable manifold passing through the outer casing and the inner casing in a sealed manner, and a pipe fed by the manifold, and the central temporary storage tank (7) has a quasi-toric or quasi-annular shape.

3. Device according to one of the preceding claims, wherein each cryogenic tank is super-insulated under vacuum against conduction, convection and radiation.

4. Device according to one of the preceding claims, provided with a front cryogenic tank (36) and a rear cryogenic tank (37), in an elongated shape along a common axis.

5. Device according to one of claims 1 to 3, comprising at least two front cryogenic tanks (36) and at least two rear cryogenic tanks (37), spherical in shape.

6. Device according to one of the preceding claims, comprising a plurality of temporary storage tanks (39) each arranged between two cryogenic tanks.

7. Device according to one of the preceding claims, wherein the central temporary storage tank (7) forms a gasification member, an upstream valve (12) being provided to be open for liquid to flow through during a filling phase of the central temporary storage tank (7) and closed outside of the filling phase, a downstream valve (13, 15) being provided to be open for gas to flow through during an emptying phase of the central temporary storage tank (7) and closed outside the emptying phase, the upstream valve and the downstream valve being closed during a gasification phase.

8. Device according to Claim 7, wherein the upstream valve and the downstream valve are controlled in an on-off manner.

9. Device according to one of the preceding claims, comprising a compressor (20) arranged downstream of a downstream valve (15), said compressor (20) being active at the end of the emptying phase to bring the pressure in the central temporary storage tank (7) to a value lower than the lowest value of the pressure in the front cryogenic tank (36) and in the rear cryogenic tank (37), and a pressure reducer (9) arranged downstream of the downstream valve, said pressure reducer (9) being active at the start of the emptying phase to bring the pressure of the gas at the outlet to a value lower than the pressure in the central temporary storage tank (7).

10. Device according to one of the preceding claims, wherein each of the cryogenic tanks (36, 37) is designed for an operating pressure of less than 8 bars and the central temporary storage tank is designed for an operating pressure of more than 500 bars.
